# EUROPÄISCHE PATENTSCHRIFT

(11) **EP 2 729 229 B1**
(45) Veröffentlichungstag und Bekanntmachung des Hinweises auf die Patenterteilung: **09.10.2019**
(21) Anmeldenummer: 12710441.2
(22) Anmeldetag: 07.03.2012
(51) Int. Cl.: B01D 35/147

(54) **FILTERELEMENT FÜR EINE FILTERVORRICHTUNG**
FILTER ELEMENT FOR A FILTER DEVICE
ÉLÉMENT FILTRANT POUR UN DISPOSITIF DE FILTRATION

(30) Priorität: 08.07.2011 DE 102011106909
(43) Veröffentlichungstag der Anmeldung: 14.05.2014
(73) Patentinhaber: Hydac Filtertechnik GmbH, 66280 Sulzbach/Saar (DE)
(72) Erfinder: SANN, Norbert, 66292 Riegelsberg (DE); RÖDER, Dirk, 66111 Saarbrücken (DE)
(74) Vertreter: Bartels und Partner, Patentanwälte
(86) Internationale Anmeldenummer: PCT/EP2012/000998
(87) Internationale Veröffentlichungsnummer: WO 2013/007320

(56) Entgegenhaltungen:
- WO-A1-2005/123216
- DE-A1-102009 015 094
- DE-U1-202007 017 614
- DE-U1-202007 018 076
- US-A- 2 932 400
- US-A- 4 320 005
- US-A1- 2007 163 945

## Beschreibung

Die Erfindung betrifft ein Filterelement für eine Filtervorrichtung mit den Merkmalen im Oberbegriff von Anspruch 1.

Filterelemente dieser Art sind Stand der Technik. Sie finden in unterschiedlichen Auslegungen, was Bauart, Baugröße und/oder Druckstufe anbelangt, weit verbreitet Anwendung in Filtervorrichtungen für die Filtration verschiedenster technischer Fluide, wie Hydraulikflüssigkeiten, Kühlschmiermittel, Kraftstoffe, Schmieröle und dergleichen. Da Betriebsstörungen oder gar Ausfälle solcher Filtervorrichtungen zu Beschädigungen oder der Zerstörung nachgeordneter Systeme führen können, was wirtschaftliche Schäden verursachen kann, kommt der Betriebssicherheit der betreffenden Filtervorrichtungen große Bedeutung zu. Von Seiten der Industrie werden daher stetig Anstrengungen unternommen, die beim Filtrationsvorgang maßgeblichen Komponenten im Hinblick auf höhere Funktionssicherheit weiter zu entwickeln. Im Ergebnis führen diese Bestrebungen zur Entwicklung verbesserter, neuartiger Filterelemente mit gegenüber den zuvor eingesetzten Filterelementen verbesserten Betriebseigenschaften. Der Nutzung dieser Vorteile steht jedoch das Problem der Kompatibilität der verbesserten, neuen Filterelemente mit den existierenden Filtervorrichtungen entgegen, die für die Benutzung mit den zuvor üblichen Filterelementen ausgelegt sind. Mit anderen Worten gesagt, ist es für eine Nutzung entsprechender, neu entwickelter Filterelemente erforderlich, die Filtergehäuse üblicher Filtervorrichtungen auszutauschen. Angesichts der weiten Verbreitung der in Betracht stehenden Filtervorrichtungen mit für übliche Filterelemente geeigneter Bauweise des Filtergehäuses, die durch Filtergehäuse geänderter Bauweise zu ersetzen sind, lassen sich die betrieblichen Vorteile der verbesserten, neuen Filterelemente kaum wirtschaftlich nutzen.

Die US 2 932 400 beschreibt ein gattungsgemäßes Filterelement für eine Filtervorrichtung mit mindestens einem Filtergehäuse, wobei das Filterelement ein Aufnahmeteil aufweist, das bei im Filtergehäuse in Funktionsposition befindlichem Filterelement mit einem einen Fluidanschluss bildenden Gehäuseteil des Filtergehäuses in Fluidverbindung kommt, wobei das Aufnahmeteil des Filterelementes eine innere, erste Führungsbahn zur abdichtenden Anlage am Gehäuseteil des einer ersten Bauweise entsprechenden Filtergehäuses sowie eine äußere, zweite Führungsbahn zur abdichtenden Anlage am Gehäuseteil des einer zweiten Bauweise entsprechenden Filtergehäuses aufweist, und wobei an der äußeren, zweiten Führungsbahn ein Außengewinde und an einer Anlagefläche an der Innenseite eines Aufnahmestutzens des Gehäuseteils des Filtergehäuses der zweiten Bauweise ein für die Zusammenwirkung mit dem Außengewinde vorgesehenes Innengewinde gebildet sind, wobei beide Führungsbahnen an einem das Aufnahmeteil bildenden Teil einer Endkappe des Filterelementes vorgesehen sind, wobei das Aufnahmeteil einen Rohrstutzen aufweist, der an der Endkappe eine Zugangsöffnung zum inneren Filterhohlraum umgibt und der an seiner Innenseite die innere, erste Führungsbahn und an seiner Außenseite die äußere, zweite Führungsbahn bildet.

Weitere Filterelemente gehen aus der DE 20 2007 017 614 U1, der DE 10 2009 015 094 A1, der US 2007/0163945 A1 und der WO 2005/123216 A1 hervor.

Im Hinblick auf diese Problematik stellt sich die Erfindung die Aufgabe, ein Filterelement zur Verfügung zu stellen, das vielseitig und daher wirtschaftlich einsetzbar ist.

Erfindungsgemäß ist diese Aufgabe durch ein Filterelement gelöst, das die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass der Rohrstutzen an der inneren, ersten Führungsbahn ein erstes Dichtelement, das am von der Endkappe entfernten Endteil dieser Führungsbahn angeordnet ist, sowie an der äußeren, zweiten Führungsbahn ein zweites Dichtelement aufweist, das an dem der Endkappe benachbarten Anfangsteil der zweiten Führungsbahn angeordnet ist.

Es ist ferner vorgesehen, dass das Aufnahmeteil des Filterelements eine innere, erste Führungsbahn zur abdichtenden Anlage am Gehäuseteil des einer ersten Bauweise entsprechenden Filtergehäuses sowie eine äußere, zweite Führungsbahn zur abdichtenden Anlage am Gehäuseteil des einer zweiten Bauweise entsprechenden Filtergehäuses aufweist. Die betrieblichen Vorteile, wie sie sich durch den Einsatz eines entsprechend weiter entwickelten, verbesserten Filterelements ergeben, lassen sich so nicht nur in Verbindung mit Filtergehäusen einer neuen Entwicklungsstufe, sondern auch mit existierenden Filtervorrichtungen mit einem Filtergehäuse nutzen, dessen Bauweise an die zuvor üblichen Filterelemente angepasst ist. Die Vorteile weiter entwickelter Filterelemente müssen daher nicht mit einem Austausch existierender Filtervorrichtungen erkauft werden.

Da die erfindungsgemäßen Filterelemente mit Filtergehäusen einer zweiten Bauweise betreibbar sind, lassen sich verbessernde Weiterentwicklungen auch seitens des Filtergehäuses ausnutzen, so dass wesentliche Verbesserungen des aus Filterelement und Filtergehäuse bestehenden Gesamtsystems verwirklichbar sind.

Bei besonders vorteilhaften Ausführungsbeispielen sind beide Führungsbahnen des Filterelements an einem das Aufnahmeteil bildenden Teil einer Endkappe vorgesehen, die eine Einfassung für ein zugehöriges, einen inneren Filterhohlraum umgebendes Filtermedium bildet. Die Festlegung des Filterelements über eine Endkappe ermöglicht auf einfache Weise die einwandfreie Lagesicherung des Filterelements in der Funktionsposition.

Mit besonderem Vorteil kann die Anordnung so getroffen sein, dass das Aufnahmeteil einen Rohrstutzen aufweist, der an der Endkappe eine Zugangsöffnung zum inneren Filterhohlraum umgibt, an seiner Innenseite die innere, erste Führungsbahn und an seiner Außenseite die äußere, zweite Führungsbahn bildet. Hierbei bildet der Rohrstutzen nicht nur beide Führungsbahnen für die Zusammenwirkung mit den entsprechenden Gehäuseteilen der Filtergehäuse unterschiedlicher Bauweise, sondern bildet auch eine sichere Fluidverbindung zwischen dem inneren Filterhohlraum und dem Fluidanschluss des jeweiligen Gehäuses.

Bei besonders vorteilhaften Ausführungsbeispielen kann die innere, erste Führungsbahn durch eine innere Zylinderfläche des Rohrstutzens gebildet sein, die für die Anlage an einer äußeren Zylinderfläche eines Aufnahmestutzens am Gehäuseteil des Filtergehäuses der ersten Bauweise vorgesehen ist.

Die Filtervorrichtung weist ein Filterelement gemäß einem der Ansprüche 1 bis 3 und mindestens ein Filtergehäuse zur Aufnahme des Filterelementes, das ein Aufnahmeteil aufweist, das bei seiner Funktionsposition im Gehäuse in Fluidverbindung mit einem einen Fluidanschluss bildenden Gehäuseteil des Filtergehäuses kommt, wobei das Filtergehäuse in einer ersten Bauweise oder in einer zweiten Bauweise an dem den Fluidanschluss aufweisenden Gehäuseteil jeweils einen Aufnahmestutzen aufweist, der den Fluidanschluss umgibt, bei der ersten Gehäusebauweise eine äußere Zylinderfläche für die abdichtende Anlage an einer inneren, ersten Führungsbahn des Aufnahmeteils des Filterelements und bei der zweiten Gehäusebauweise eine innere Zylinderfläche für die abdichtende Anlage an der äußeren, zweiten Führungsbahn des Aufnahmeteils des Filterelements aufweist, wobei am Aufnahmestutzen des Filtergehäuses der zweiten Bauweise ein Innengewinde vorgesehen ist, das zur Zusammenwirkung mit einem Außengewinde an der äußeren, zweiten Führungsbahn des Aufnahmeteils des Filterelements vorgesehen ist. Die Filtervorrichtung ist ferner dadurch gekennzeichnet, dass der Aufnahmestutzen des Filtergehäuses der zweiten Bauweise einen Innenring aufweist, der an der Innenseite des Aufnahmestutzens einen Ringraum begrenzt, in den das Aufnahmeteil des Filterelementes bei der Funktionsposition derart eingreift, dass ein an der inneren, ersten Führungsbahn angeordnetes Dichtelement an der Innenseite des Ringraumes anliegt.

Nachstehend ist die Erfindung anhand der Zeichnung im Einzelnen erläutert. Es zeigen:
- Fig. 1: einen schematisch vereinfacht gezeichneten Längsschnitt eines Ausführungsbeispiels der erfindungsgemäßen Filtervorrichtung, versehen mit einem erfindungsgemäßen Filterelement, wobei das Filtergehäuse einer ersten Bauweise entspricht;
- Fig. 2: einen vergrößert gezeichneten Ausschnitt des in Fig. 1 mit II bezeichneten Bereiches;
- Fig. 3: einen der Fig. 1 ähnlichen Längsschnitt, wobei das Filterelement jedoch in einem Filtergehäuse einer zweiten Bauweise aufgenommen ist; und
- Fig. 4: einen vergrößert gezeichneten Ausschnitt des in Fig. 3 mit IV bezeichneten Bereichs.

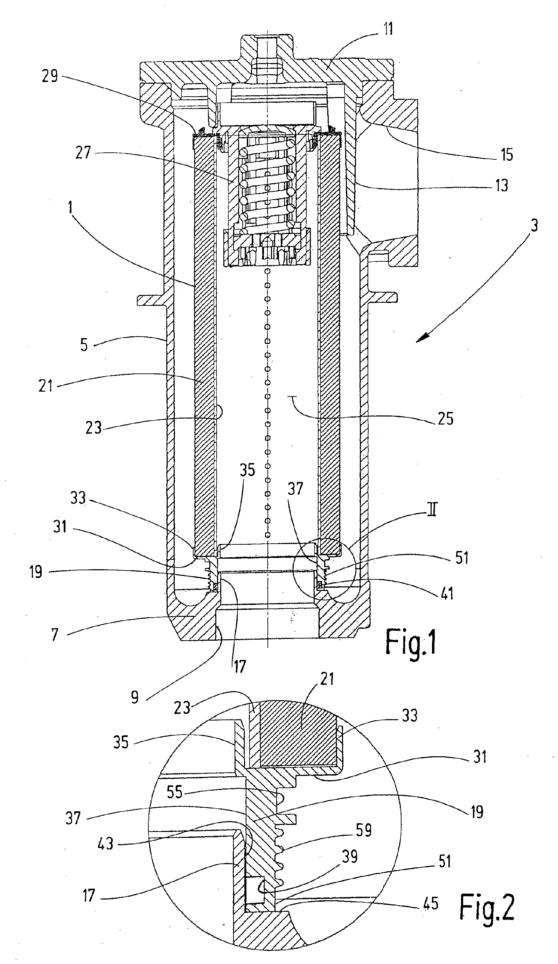

Die Fig. 1 und 2 zeigen ein Ausführungsbeispiel der Erfindung, wobei ein erfindungsgemäßes Filterelement 1 in einem als Ganzes mit 3 bezeichneten Filtergehäuse aufgenommen ist, das einer üblichen Bauweise entspricht, wie sie in der Technik verbreitet zum Einsatz kommt. Das Filtergehäuse 3 weist ein Gehäusehauptteil 5 auf, das einen im großen Ganzen hohlzylinderförmigen Innenraum für die Aufnahme des Filterelements 1 definiert. Am Boden 7 ist das Gehäuse 3 bis auf eine zentrale Ausströmöffnung 9 geschlossen, aus der im Betrieb abgereinigtes Fluid ausgebbar ist. Das obere, offene Ende des Gehäusehauptteils 5 ist in der bei derartigen Vorrichtungen üblichen Weise durch einen abnehmbaren Gehäusedeckel 11 geschlossen. Dieser weist einen axialen Fortsatz 13 auf, der eine teilweise Überdeckung einer Zuströmöffnung 15 bildet, so dass der Fortsatz 13 eine Prallwand zum Schutz des Filterelements 1 gegen die Strömung des Unfiltrats bildet.

Das Gehäuseteil, das am Boden 7 die Ausströmöffnung 9 umgibt, welche den Fluidanschluss für die Abgabe des Filtrats bildet, hat die Form eines in Richtung auf das Filterelement 1, d.h. nach oben hin, vorspringenden Aufnahmestutzens 17, der in Zusammenwirkung mit einem Aufnahmeteil des Filterelements 1, der die Form eines Rohrstutzens 19 besitzt, als Elementaufnahme dient, an der das in Funktionsposition befindliche Filterelement 1 unter Bildung einer Abdichtung festgelegt ist. Die Fig. 1 und 2 zeigen das Filterelement 1 in dieser Funktionsposition, in der das Filterelement 1 durch den geschlossenen Gehäusedeckel 11 gesichert ist. Wie bei derartigen Filterelementen 1 üblich, weist dieses ein Filtermedium 21 auf, das in Form eines Hohlzylinders ein fluiddurchlässiges Stützrohr 23 umgibt. Beim Filtrationsbetrieb, wobei Unfiltrat über die Zuströmöffnung 15 eintritt und das Filtermedium 21 von der Außenseite nach innen hindurchströmt, bildet der vom Stützrohr 23 umgebene innere Filterhohlraum 25 die Reinseite. Ein zum Gehäusedeckel 11 gehörender Ventileinsatz 27, der in Zusammenwirkung mit einer oberen Endkappe 29 den inneren Filterhohlraum 25 am oberen Ende verschließt, bildet in an sich bekannter Weise eine Bypasseinrichtung, die druckbetätigbar ist, um einen Nebenschluss zu bilden, über den Unfiltrat von der Zuströmöffnung 15 zum inneren Filterhohlraum 25 gelangen kann.

Wie Fig. 2 deutlicher zeigt, ist der als Aufnahmeteil des Filterelements 1 dienende Rohrstutzen 19 einstückig an der unteren Endkappe 31 des Filterelements 1 angeformt, die eine äußere Einfassung 33 für den Endbereich des Filtermediums 21 bildet. Neben dem an der Innenseite des Filtermediums 21 anliegenden Stützrohr 23 befindet sich an der Endkappe 31 ein in den Filterhohlraum 25 axial vorstehendes kurzes Innenrohr 35, dessen Innenseite bei der Funktionsposition des Filterelements 1 mit der Innenseite des Aufnahmestutzens 17 fluchtet.

Für die Zusammenwirkung des das Aufnahmeteil bildenden Rohrstutzens 19 mit dem Gehäuse 1 in der in Fig1 und 2 gezeigten ersten Bauweise bildet der Rohrstutzen 19 an seiner Innenseite eine innere, erste Führungsbahn 37 in Form einer ebenen Zylinderfläche, siehe Fig. 2, die lediglich in der Nähe des freien, unteren Endes durch eine Ringnut 39 für ein nur in Fig. 1 eingezeichnetes Dichtelement 41 unterbrochen ist. Bei der Funktionsposition bildet so die innere, erste Führungsbahn 37 in Verbindung mit dem Dichtelement 41 eine abgedichtete Anlage an der äußeren Zylinderfläche 43 des Aufnahmestutzens 17, siehe Fig. 2. Wie dieser Figur ebenfalls deutlich entnehmbar ist, weist die Zylinderfläche 43 des Aufnahmestutzens 17 am Ende eine Stufe 45 auf, an der bei der Funktionsposition das Ende des Rohrstutzens 19 anliegt.

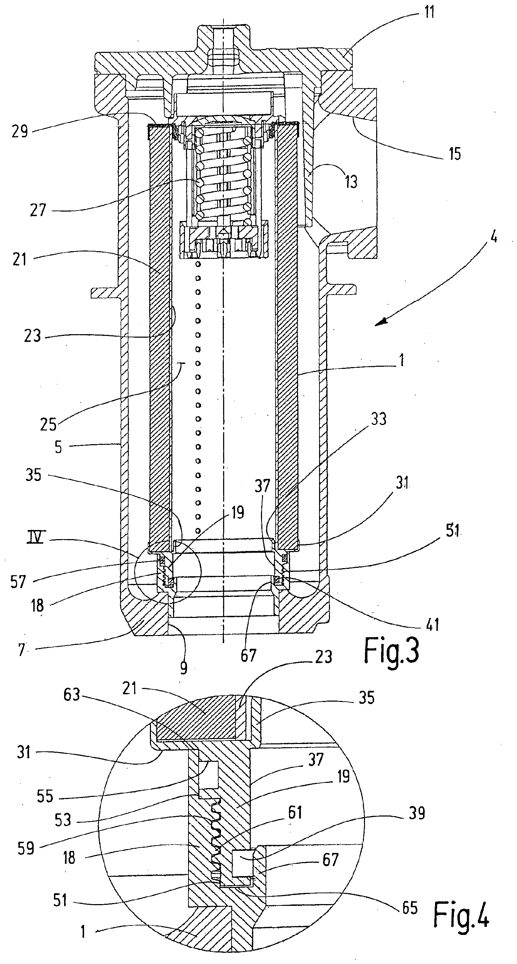

Die Fig. 3 und 4 zeigen, dass das erfindungsgemäße Filterelement 1 auch in Verbindung mit einem Filtergehäuse 4 einer zweiten Bauweise betreibbar ist. Diese unterscheidet sich von der ersten Bauweise dadurch, dass der mit dem Aufnahmeteil, d.h. dem Rohrstutzen 19, des Filterelements 1 zusammenwirkende Aufnahmestutzen 18 dahingehend abgeändert ist, dass er durch Bilden einer Gewindeverbindung eine verbesserte Lagesicherung des Filterelements 1 gewährleistet. Zu diesem Zweck weist der Rohrstutzen 19 zusätzlich zur inneren Führungsbahn 37 an der Außenseite eine äußere, zweite Führungsbahn 51 auf, die für die abdichtende Anlage an der inneren Zylinderfläche 53 des Aufnahmestutzens 18 des Filtergehäuses 4 der zweiten Bauweise vorgesehen ist, wobei am Rohrstutzen 19 der Elementaufnahme 31 eine Ringnut 55 für ein Dichtelement 57, siehe Fig. 3, vorgesehen ist. Diese Ringnut 55 befindet sich an dem der Endkappe 31 benachbarten Anfangsteil des Rohrstutzens 19. Anschließend an diese Ringnut 55 ist der Rohrstutzen 19 mit einem Außengewinde 59 versehen, das mit einem Innengewinde 61 an der Innenseite des Aufnahmestutzens 18 verschraubbar ist, siehe Fig. 4.

Bei der in Fig. 3 und 4 gezeigten Funktionsposition liegt das Ende 63 des Aufnahmestutzens 18 an der Endkappe 31 an. Das freie Ende des Rohrstutzens 19 liegt am Grund 65 eines Ringraumes an, der zwischen einem Innenring 67 des Aufnahmestutzens 18 und der inneren Zylinderfläche 53 des Aufnahmestutzens 18 definiert ist und in den sich der Rohrstutzen 19 bei der Funktionsposition hinein erstreckt. Der in der Ringnut 39 des Rohrstutzens 19 aufgenommene Dichtring 41 bildet somit eine zusätzliche Abdichtung gegenüber dem Aufnahmestutzen 18 des der zweiten Bauweise entsprechenden Filtergehäuses 4.

## Patentansprüche

1. Filterelement für eine Filtervorrichtung mit mindestens einem Filtergehäuse (3; 4), wobei das Filterelement ein Filtermedium aufweist, welches in Form eines Hohlzylinders einen inneren Filterhohlraum umgibt, wobei das Filterelement (1) ein Aufnahmeteil (19) aufweist, das bei im Filtergehäuse (3; 4) in Funktionsposition befindlichem Filterelement (1) mit einem einen Fluidanschluss (9) bildenden Gehäuseteil (17; 18) des Filtergehäuses (3; 4) in Fluidverbindung kommt, wobei das Aufnahmeteil (19) des Filterelementes (1) eine innere, erste Führungsbahn (37) zur abdichtenden Anlage am Gehäuseteil (17) des einer ersten Bauweise entsprechenden Filtergehäuses (3) sowie eine äußere, zweite Führungsbahn (51) zur abdichtenden Anlage am Gehäuseteil (18) des einer zweiten Bauweise entsprechenden Filtergehäuses (4) aufweist, und wobei an der äußeren, zweiten Führungsbahn (51) ein Außengewinde (59) und an einer Anlagefläche an der Innenseite eines Aufnahmestutzens (18) des Gehäuseteils des Filtergehäuses (4) der zweiten Bauweise ein für die Zusammenwirkung mit dem Außengewinde (59) vorgesehenes Innengewinde (61) gebildet sind, wobei beide Führungsbahnen (37, 51) an einem das Aufnahmeteil bildenden Teil (19) einer Endkappe (31) des Filterelementes (1) vorgesehen sind, wobei das Aufnahmeteil (19) einen Rohrstutzen (19) aufweist, der an der Endkappe (31) eine Zugangsöffnung zum inneren Filterhohlraum (25) umgibt und der an seiner Innenseite die innere, erste Führungsbahn (37) und an seiner Außenseite die äußere, zweite Führungsbahn (51) bildet, **dadurch gekennzeichnet, dass** der Rohrstutzen (19) an der inneren, ersten Führungsbahn (37) ein erstes Dichtelement (41), das am von der Endkappe (31) entfernten Endteil dieser Führungsbahn (37) angeordnet ist, sowie an der äußeren, zweiten Führungsbahn (51) ein zweites Dichtelement (57) aufweist, das an dem der Endkappe (31) benachbarten Anfangsteil der zweiten Führungsbahn (51) angeordnet ist.

2. Filterelement nach Anspruch 1, **dadurch gekennzeichnet, dass** die Endkappe (31) eine Einfassung (33) für das zugehörige, den inneren Filterhohlraum (25) umgebende Filtermedium (21) bildet.

3. Filterelement nach Anspruch 1 oder 2, **dadurch gekennzeichnet, dass** die innere, erste Führungsbahn (37) durch eine innere Zylinderfläche des Rohrstutzens (19) gebildet ist, die für die Anlage an einer äußeren Zylinderfläche (43 eines Aufnahmestutzens (17) am Gehäuseteil des Filtergehäuses (3) der ersten Bauweise vorgesehen ist.

4. Filtervorrichtung mit einem Filterelement (1) gemäß einem der Ansprüche 1 bis 3, mit mindestens einem Filtergehäuse (3; 4) zur Aufnahme des Filterelementes (1), das ein Aufnahmeteil (19) aufweist, das bei seiner Funktionsposition im Gehäuse (3; 4) in Fluidverbindung mit einem einen Fluidanschluss (9) bildenden Gehäuseteil (17; 18) des Filtergehäuses (3; 4) kommt, wobei das Filtergehäuse (3; 4) in einer ersten Bauweise (3) oder in einer zweiten Bauweise (4) an dem den Fluidanschluss (9) aufweisenden Gehäuseteil jeweils einen Aufnahmestutzen (17; 18) aufweist, der den Fluidanschluss (9) umgibt, bei der ersten Gehäusebauweise (3) eine äußere Zylinderfläche (43) für die abdichtende Anlage an einer inneren, ersten Führungsbahn (37) des Aufnahmeteils (19) des Filterelements (1) und bei der zweiten Gehäusebauweise (4) eine innere Zylinderfläche (53) für die abdichtende Anlage an der äußeren, zweiten Führungsbahn (51) des Aufnahmeteils (19) des Filterelements (1) aufweist, wobei am Aufnahmestutzen (18) des Filtergehäuses (4) der zweiten Bauweise ein Innengewinde (61) vorgesehen ist, das zur Zusammenwirkung mit einem Außengewinde (59) an der äußeren, zweiten Führungsbahn (51) des Aufnahmeteils (19) des Filterelements (1) vorgesehen ist, **dadurch gekennzeichnet, dass** der Aufnahmestutzen (18) des Filtergehäuses (4) der zweiten Bauweise einen Innenring (67) aufweist, der an der Innenseite des Aufnahmestutzens (18) einen Ringraum begrenzt, in den das Aufnahmeteil (19) des Filterelementes (1) bei der Funktionsposition derart eingreift, dass ein an der inneren, ersten Führungsbahn (37) angeordnetes Dichtelement (41) an der Innenseite des Ringraumes anliegt.

5. Filtervorrichtung nach Anspruch 4, **dadurch gekennzeichnet, dass** der Aufnahmestutzen (17) des Gehäuses (3) der ersten Bauweise an der die Anlagefläche für die erste Führungsbahn (37) des Filterelementes bildenden äußeren Zylinderfläche (43) eine Stufe (45) aufweist, an der das Ende des Aufnahmeteiles (19) des in Funktionsposition befindlichen Filterelementes (1) anliegt.

6. Filtervorrichtung nach Anspruch 4 oder 5, **dadurch gekennzeichnet, dass** das Ende des Aufnahmestutzens (19) des Filtergehäuses (4) der zweiten Bauweise an der Endkappe (31) des in Funktionsposition befindlichen Filterelementes (1) anliegt.

## Claims

1. Filter element for a filter device with at least one filter housing (3; 4), wherein the filter element has a filter medium, which, in the form of a hollow cylinder, surrounds an inner filter cavity,
wherein the filter element (1) has a receiving part (19) which, in the case of a filter element (1) in a functional position in the filter housing (3; 4) comes into fluid communication with a housing part (17; 18) of the filter housing (3; 4), forming a fluid connection (9), wherein the receiving part (19) of the filter element (1) has an inner, first guide track (37) for sealing engagement with the housing part (17) of the filter housing (3) corresponding to a first construction as well as an outer second guiding track (51) for sealing engagement with the housing part (18) of the filter housing (4) corresponding to a second construction, and wherein, on the outer, second guiding track (51), an external screw thread (59) and, on a contact surface on the inner side of a receiving socket (18) of the housing part of the filter housing (4) of the second construction, an internal screw thread (61) provided for engagement with the external screw thread (59) are formed, wherein both guiding tracks (37, 51) are provided on a part forming the receiving part (19) of an end cap (31) of the filter element (1), wherein the receiving part (19) has a pipe socket (19) which, at the end cap (31), surrounds an access opening to the inner filter cavity (25) and which forms the inner first guiding track (37) on the inside and the outer, second guiding track (51) on the outside, **characterised in that** the pipe socket (19) on the inner first guiding track (37) has a first sealing element (41), which is arranged on the end portion of this guiding track (37) remote from the end cap (31), and, on the outer, second guiding track (51), a second sealing element (57), which is arranged on the start portion of the second guiding element (51) adjacent to the end cap (31).

2. Filter element according to claim 1, **characterised in that** the end cap (31) forms a skirt (33) for the accompanying filter medium (21) surrounding the inner filter cavity (25).

3. Filter element according to claim 1 or 2, **characterised in that** the inner, first guiding track (37) is formed by a an inner cylinder surface of the pipe socket (19), which is provided for sealing engagement with an outer cylinder surface (43) of a receiving socket (17) on the housing part of the filter housing (3) of the first construction.

4. Filter device with a filter element (1) according to any one of claims 1 to 3, with at least a filter housing (3; 4) for receiving the filter element (1), which has a receiving part (19) which, in its functional position in the filter housing (3; 4), comes into fluid communication with a housing part (17; 18) of the filter housing (3; 4) forming a fluid connection (9), wherein the filter housing (3; 4) in a first construction (3) or in a second construction (4) each has a receiving socket (17; 18) at the housing part having the fluid connection (9), which surrounds the fluid connection (9); in the case of the first housing construction (3) an outer cylinder surface (43) for sealing engagement with the inner, first guiding track (37) of the receiving part (19) of the filter element (1) and, in the case of the second housing construction (4), an inner cylinder surface (53) for sealing engagement with the outer, second guiding track (51) of the receiving part (19) of the filter element (1), wherein, at the receiving socket (18) of the filter housing (4) of the second construction, an internal screw thread (61) is provided for engagement with an external screw thread (59) on the outer, second guiding track (51) of the receiving part (19) of the filter element (1), **characterised in that** the receiving socket (18) of the filter housing (4) of the second construction has an inner ring (67), which delimits an annulus on the inside of the receiving socket (18) into which the receiving part (19) of the filter element (1), when in the functional position, engages in such a way that a sealing element (41) arranged on the inner, first guiding track (37) fits inside the annulus.

5. Filter device according to claim 4, **characterised in that** the receiving socket (17) of the filter housing (3) of the first construction has a step (45) on the outer cylinder surface (43) forming the contact surface for the first guiding track (37) of the filter element which the end of the receiving part (19) of the filter element (1), when in the functional position, abuts.

6. Filter device according to claim 4 or 5, **characterised in that** the end of the receiving socket (19) of the filter housing (4) of the second construction abuts the end cap (31) of the filter element (1), when in the functional position.

## Revendications

1. Elément de filtre d'un dispositif de filtration, comprenant au moins une enveloppe (3; 4) de filtre, l'élément de filtre ayant un milieu filtrant, qui, sous la forme d'un cylindre creux, entoure une cavité intérieure de filtre,
dans lequel l'élément (1) de filtre a une partie (19) de réception, qui, lorsque l'élément (1) de filtre se trouve en position de fonctionnement dans l'enveloppe (3; 4) du filtre, vient en liaison fluidique avec une partie (17; 18), formant un raccord (9) pour du fluide, de l'enveloppe (3; 4) du filtre, la partie (19) de réception de l'élément (1) de filtre ayant un premier chemin (37) intérieur de guidage pour l'application étanche à la partie (17) de l'enveloppe (3) du filtre correspondant à un premier mode de construction, ainsi qu'un deuxième chemin (51) extérieur de guidage pour l'application étanche à la partie (18) de l'enveloppe (4) du filtre correspondant à un deuxième mode de construction, et dans lequel, sur le deuxième chemin (51) extérieur de guidage, est formé un filetage (59) extérieur et, sur une surface d'application du côté intérieur d'une tubulure (18) de réception de la partie de l'enveloppe (4) de filtre du deuxième mode de construction, est formé un taraudage (61) prévu pour coopérer avec le filetage (59), les deux chemins (37, 51) de guidage étant prévus sur une partie (19), formant la partie de réception, d'une coiffe (31) d'extrémité de l'élément (1) de filtre, la partie (19) de réception ayant une tubulure (19), qui, à la coiffe (31) d'extrémité, entoure une ouverture d'accès à la cavité (25) intérieure du filtre et qui forme, sur son côté intérieur, le premier chemin (37) intérieur de guidage et, sur son côté extérieur, le deuxième chemin (51) extérieur de guidage, **caractérisé en ce que** la tubulure (19) a, sur le premier chemin (37) intérieur de guidage, un premier élément (41) d'étanchéité, qui est monté sur la partie de fin, loin de la coiffe (31) d'extrémité, de ce chemin (37) de guidage, ainsi que, sur le deuxième chemin (51) extérieur de guidage, un deuxième élément (57) d'étanchéité, qui est monté sur la partie de début voisine de la coiffe (31) d'extrémité du deuxième chemin (51) de guidage.

2. Elément de filtre suivant la revendication 1, **caractérisé en ce que** la coiffe (31) d'extrémité forme une bordure (33) du milieu (21) filtrant associé entourant la cavité (25) intérieure du filtre.

3. Elément de filtre suivant la revendication 1 ou 2, **caractérisé en ce que** le premier chemin (37) intérieur de guidage est formé par une surface intérieure cylindrique de la tubulure (19), qui est prévue pour s'appliquer à une surface (43) extérieure cylindrique d'une tubulure (17) de réception à la partie de l'enveloppe (3) du filtre du premier mode de réalisation.

4. Dispositif de filtration comprenant un élément (1) de filtre suivant l'une des revendications 1 à 3, comprenant au moins une enveloppe (3; 4) de filtre pour la réception de l'élément (1) de filtre, lequel a une partie (19) de réception, qui, dans sa position de fonction dans l'enveloppe (3; 4), vient en liaison fluidique avec une partie (17; 18), formant un raccord (9) pour du fluide, de l'enveloppe (3; 4) du filtre, l'enveloppe (3; 4) du filtre ayant, dans un premier mode (3) de réalisation ou dans un deuxième mode (4) de réalisation, à la partie de l'enveloppe ayant le raccord (9) pour du fluide, respectivement une tubulure (17; 18) de réception, qui entoure le raccord (9) pour du fluide, dans lequel le premier mode (3) de réalisation de l'enveloppe a une surface (43) cylindrique extérieure pour l'application étanche à un premier chemin (37) intérieure de guidage de la partie (19) de réception de l'élément (1) de filtre et, dans le deuxième mode (4) de réalisation de l'enveloppe, une surface (53) cylindrique intérieure pour l'application étanche au deuxième chemin (51) extérieur de guidage de la partie (19) de réception de l'élément (1) de filtre, dans lequel, sur la tubulure (18) de réception de l'enveloppe (4) de filtre du deuxième mode de réalisation, est prévu un taraudage (61), qui est prévu pour coopérer avec un filetage (59) du deuxième chemin (51) extérieur de guidage de la pièce (19) de réception de l'élément (1) de filtre, **caractérisé en ce que** la tubulure (18) de réception de l'enveloppe (4) du filtre du deuxième mode de réalisation a une bague (67) intérieure, qui délimite, du côté intérieur de la tubulure (18) de réception, un espace annulaire, dans lequel pénètre la partie (19) de réception de l'élément (1) de filtre en la position de fonctionnement, de manière à ce qu'un élément (41) d'étanchéité monté sur le premier chemin (37) intérieur de guidage s'applique à la face intérieure de l'espace annulaire.

5. Dispositif de filtration suivant la revendication 4, **caractérisé en ce que** la tubulure (17) de réception de l'enveloppe (3) du premier mode de réalisation a, sur la surface d'application de la surface (43) cylindrique extérieure formant le premier chemin (37) de guidage de l'élément de filtre, un palier (45), sur lequel s'applique l'extrémité de la partie (19) de réception de l'élément (1) de filtre, se trouvant en position de fonctionnement.

6. Dispositif de filtration suivant la revendication 4 ou 5, **caractérisé en ce que** l'extrémité de la tubulure (19) de réception de l'enveloppe (4) du filtre du deuxième mode de réalisation s'applique à la coiffe (31) d'extrémité de l'élément (1) de filtre se trouvant en position de fonctionnement.
